# EUROPÄISCHE PATENTANMELDUNG

(11) **EP 2 051 159 A1**
(43) Veröffentlichungstag der Anmeldung: **22.04.2009**
(21) Anmeldenummer: 07118527.6
(22) Anmeldetag: 15.10.2007
(51) Int. Cl.: G06F 3/03

(54) **Computereingabestift mit flexibler Spitze**

(71) Anmelder: Enwemedia GMBH, 92711 Parkstein (DE)
(72) Erfinder: Weig, Norbert, 92711 Parkstein (DE)
(74) Vertreter: Lang, Christian

(57) **Zusammenfassung**

Die vorliegende Erfindung betrifft ein Eingabegerät für ein Datenverarbeitungsgerät bzw. ein entsprechendes Datenverarbeitungsgerät mit einem entsprechenden Eingabegerät mit einer Schnittstelle zur Verbindung mit einem Datenverarbeitungsgerät und einer Einrichtung zur Positionserkennung, wobei das Eingabegerät einen Stift (4) mit einer zylinderartigen Grundform umfasst, dessen eines Ende als Schreib- und/oder Malende (8) zur Eingabe von Daten ausgebildet ist wobei das Schreib- und/oder Malende mindestens ein zumindest teilweise in mehrere Raumrichtungen bewegliches Kontaktelement (7) aufweist.

## Beschreibung

### HINTERGRUND DER ERFINDUNG

### GEBIET DER ERFINDUNG

Die vorliegende Erfindung betrifft ein Eingabegerät für ein Datenverarbeitungsgerät mit einer Schnittstelle zur Verbindung mit einem Datenverarbeitungsgerät und einer Einrichtung zur Positionserkennung, wobei das Eingabegerät einen Stift mit einer zylinderartigen Grundform umfasst, und wobei das eine Ende als Schreib- und/oder Malende zur Eingabe von Daten ausgebildet ist, sowie ein Datenverarbeitungsgerät mit einem entsprechenden Eingabegerät.

### STAND DER TECHNIK

Eingabegeräte für Datenverarbeitungsgeräte gibt es in vielen unterschiedlichen Formen. Neben der Tastatur, dem Touch-Pad, der Maus oder vergleichbaren Eingabegeräten sind auch sogenannten Computereingabestifte oder Digitalisierungsstifte bekannt. Diese den üblichen Schreibstiften nachgebildeten Eingabegeräte umfassen aktive oder passive Stifte, welche mit entsprechenden Oberflächen, wie drucksensitiven Monitoren, Digitalisierungstabletts oder auch ganz normal üblichen Schreibflächen zusammenwirken. Digitalisierungsstifte oder Computereingabestifte verwenden unterschiedlichste Technologien, um eine Bewegung des Cursors auf dem Bildschirm eines Datenverarbeitungsgerätes, also eine Positionszuordnung und eine damit verbundene Dateneingabe zu bewirken. Ein Beispiel hierfür ist die Verwendung von optischen Erkennungsmitteln, mit welchen auf unterschiedliche Weise durch Erfassung von Licht und entsprechenden Signalen einerseits die Position des Eingabestiftes in einem bestimmten Feld, z.B. einem Monitor, erkannt und andererseits entsprechend Informationen eingegeben werden kann. Die Dateneingabe kann die Erfassung der mit dem Stift geschriebenen Information in Art einer Texterkennung oder die direkte graphische Codierung entsprechend einer vorausgewählten Graphikkomponente, z.B. Farbe des erfassten Positionsortes sein. Diese betrifft beispielsweise Mal- oder Zeichensoftware, bei welcher an der Position des Eingabestiftes als Information eine entsprechende Farbe auf dem zu bearbeitenden elektronischen Zeichenblatt eingegeben wird.

Eine optische Eingabevorrichtung ist in der EP 07 106 644 beschrieben, welche durch Verweis hierin vollständig mit aufgenommen wird.

Andere Erfassungstechnologien entsprechender Eingabestifte beruhen auf elektrischen Wechselwirkungen zwischen dem Stift und einem Digitalisierungsbrett und/oder einem entsprechend hergerichteten Bildschirm.

Darüber hinaus sind drucksensitive Monitore bekannt, welche transparente leitfähige Schichten aufweisen, die mittels Druck so beeinflusst werden können, dass sich ihr elektrischer Zustand ändert und somit eine Positionserfassung und/oder Dateneingabe möglich wird. Auch andere physikalische Effekte können zur Positionserfassung und Dateneingabe eines Eingabestiftes genutzt werden, wie z.B. Beschleunigungs- und Bewegungssensoren und dgl.

Ein Beispiel für einen Computereingabestift ist auch in der GB 22 70 740 A beschrieben.

Allen diesen unterschiedlichen Eingabegeräten ist jedoch gemeinsam, dass üblicherweise der verwendete Eingabestift eine feste, starre Spitze aufweist, mittels der der Stift über eine Oberfläche bewegt werden kann. Bei manchen Ausführungsformen ist die Spitze entlang der Längsachse entgegen einer Federkraft verschiebbar gelagert, um unterschiedlichen Anpressdruck der Spitze aufnehmen zu können. Außerdem wird bei einigen bekannten Eingabestiften der Anpressdruck gemessen, um aus dem Anpressdruck Eingabeinformationen, beispielsweise die Strichstärke und dgl. generieren zu können. Ein derartiger Digitalisierungsstift ist z.B. in der EP 390 88 0 B1 beschrieben, wobei hier ein Handgerät zum Einsatz kommt, welches eine sogenannte Klinge in Form einer dünnen Platte aufweist, an welcher Messsensoren als Belastungssensoren vorgesehen sind, die eine Durchbiegung der Klinge erfassen. Entsprechend der Durchbiegung der Klinge kann der Auflagedruck ermittelt und somit die Strichstärke angepasst werden. Allerdings zeigt diese Ausführungsform eine sich flächig erstreckende Klinge in Form einer Platte, welche entsprechend der angeschlossenen Sensoren lediglich in eine Richtung, nämlich senkrecht zur Hauptfläche der Platte, also um eine in der Plattenebene liegende Drehachse gebogen werden kann. Das lediglich in eine Richtung flexible Kontaktelement des Eingabestiftes dient hier ausschließlich zur Ermittlung des Auflage- bzw. Anpressdrucks.

### OFFENBARUNG DER EFINDUNG

### AUFGABE DER ERFINDUNG

Es ist Aufgabe der Erfindung ein Eingabegerät für ein Datenverarbeitungsgerät mit einem Stift oder ähnlichem zu schaffen, wobei der Stift für künstlerische Anwendungen das Zeichen- bzw. Malgefühl eines Pinsels vermitteln soll. Die taktile bzw. aptische Wahrnehmung soll gegenüber den steifen bzw. nur in eine Richtung federnd gelagerten Spitzen bzw. dem aus der EP 0 309 880 B1 bekannten einseitig biegsamen Klingenelement ein verbessertes Zeichen- bzw. Malgefühl vermitteln. Die breite Anwendung des elektronischen bzw. digitalen Malens wird für die breite Anwendung bisher im Wesentlichen durch das bei den bisherigen Eingabegräten veränderte Malgefühl be- bzw. verhindert.

Darüber hinaus soll ein entsprechendes Eingabegerät auch schonend zu den entsprechenden Oberflächen, auf denen das Eingabegerät genutzt wird, z.B. Monitoroberflächen sein.

Ferner soll ein erfindungsgemäßes Eingabegerät bzw. ein Datenverarbeitungsgerät mit einem entsprechenden Eingabegerät einfach herstellbar und einfach anwendbar sein.

### TECHNISCHE LÖSUNG

Diese Aufgabe wird gelöst mit einem Eingabegerät mit den Merkmalen des Anspruchs 1 sowie einem Datenverarbeitungsgerät mit den Merkmalen des Anspruchs 23. Vorteilhafte Ausgestaltungen sind Gegenstand der abhängigen Ansprüche.

Die Grundlage der vorliegenden Erfindung ist die Erkenntnis, dass mit Eingabestiften basierend auf vielen unterschiedlichen physikalischen bzw. technischen Konzepten die Erzielung eines Pinselgefühles bei der künstlerischen Nutzung des entsprechenden Eingabestiftes möglich ist, wenn am Schreib- und/oder Malende des entsprechenden Stiftes mit einem vorzugsweise zylinderartigen Grundkörper ein zumindest teilweise in mehrere Raumrichtungen bewegliches Kontaktelement vorgesehen ist, um die flexible Führung einer Pinselspitze zu simulieren.

Ein entsprechendes Eingabegerät für ein Datenverarbeitungsgerät weist zumindest teilweise in den Stift integriert oder separat dazu eine Einrichtung zur Positionserkennung sowie eine Schnittstelle zum Datenverarbeitungsgerät auf. Die Schnittstelle kann hierbei in ursprünglichen Sinn als Verbindungsstelle zwischen dem Eingabegerät, beispielsweise dem Stift und dem Datenverarbeitungsgerät verstanden werden. Allerdings soll in der vorliegenden Anmeldung unter "Schnittstelle" auch das Zusammenwirken von Komponenten des Eingabegerätes mit dem Datenverarbeitungsgerät verstanden werden, wobei das Eingabegerät zumindest teilweise in dem Datenverarbeitungsgerät integriert sein kann. Beispielsweise kann bei einer Eingabe über einen drucksensitiven Monitor die Ausgestaltung des drucksensitiven Monitors mit entsprechenden transparenten leitfähigen Schichten zur Erzeugung der Drucksensitivität als Bestandteil eines Eingabegerätes verstanden werden, so dass die Schnittstelle eine entsprechende Anbindung bzw. das Zusammenwirken der leitfähigen transparenten Schichten mit dem Datenverarbeitungsgerät umfasst.

Umgekehrt kann auch das Datenverarbeitungsgerät teilweise oder komplett im Eingabegerät vorgesehen sein, so dass lediglich eine Ausgabe auf eine Anzeigevorrichtung, wie einen Monitor, einen Projektor (Beamer) oder dgl. erfolgt, wobei z.B. auch eine Projektionseinrichtung im Eingabegerät enthalten sein kann.

Die Einrichtung zur Positionserkennung ermöglicht die Zuordnung des Stiftes des Eingabegerätes zu einem bestimmten Ort einer zu beschreibenden oder zu bearbeitenden Fläche, wie beispielsweise einem elektronischen Zeichenblatt. Da dies üblicherweise zur Bearbeitung an einem entsprechenden Ausgabegerät, wie einem Monitor angezeigt wird, dient die Einrichtung zur Positionserkennung üblicherweise auch der Zuordnung des Eingabestiftes zu einer Position auf dem Monitor, beispielsweise einem Cursor.

Die Eingabe von Daten kann hier unmittelbar über die Zuordnung von Informationen an die Position erfolgen. Dies bedeutet, dass beispielsweise in einem Malmodus an einer entsprechend festgestellten Position des Eingabestiftes das zu bearbeitende Zeichenblatt an der entsprechenden Position mit einer bestimmten Farbe gefärbt wird.

Darüber hinaus kann durch die Position eine bestimmte Auswahl, beispielsweise in einem Menü getroffen werden, welche durch eine zusätzliche Aktion, wie beispielsweise Betätigen eines Schalters, z.B. einer entsprechenden Return-Taste, aktiviert wird.

Gemäß der vorliegenden Erfindung weist das Schreib- und/oder Malende eines entsprechenden Stifts ein zumindest teilweise in mehrere Raumrichtungen bewegliches Kontaktelement auf. Unter Raumrichtungen sind hierbei unabhängige Raumrichtungen, wie z.B. die Koordinatenachsen eines kartesischen Koordinatensystems gemeint.

Unter "beweglich" wird sowohl die Bewegung des gesamten Kontaktelementes als auch die teilweise Bewegung eines Kontaktelementes, beispielsweise durch eine Deformation verstanden.

Darüber hinaus kann das Kontaktelementen entlang einer oder mehrerer Raumachsen verschiebbar und/oder um eine oder mehrerer Raumachsen verschwenkbar sein.

Entsprechend kann das Kontaktelement auch ein oder mehrere Gelenke umfassen, wobei die Gelenke in unterschiedlichster Art und Weise, als Festkörpergelenke, z.B. in Form von entsprechenden elastischen Filmscharnieren, oder als Drehgelenke oder dgl. ausgebildet sein können.

Das Kontaktelement kann somit reversibel deformierbar bzw. reversibel flexibel bewegbar sein.

Insbesondere kann das Kontaktelement in alle unabhängigen Raumrichtungen flexibel bewegbar sein.

Nach einer ersten Ausgestaltung kann das Kontaktelement als elastischer Hohlkörper, insbesondere als elastische Hohlkugel oder als Hohlkörper mit einer ähnlichen Form ausgebildet sein oder ein entsprechendes Teil davon umfassen. Neben einer exakten Kugelform können somit ähnliche Hohlkörper mit elliptischem Querschnitt oder dgl. vorgesehen sein. Derartige Körper können bei der Kontaktierung mit einer Oberfläche dem Benutzer ein Gefühl vermitteln, wie es beim Malen mit einem Pinsel auftritt.

Eine weitere Ausführungsform kann eine elastische Hülse oder ein entsprechender elastischer rohrartiger Körper, wie beispielsweise eine Zylinderhülse oder ein Mehrkantrohr sein. Diese Variante hat den Vorteil, dass eine Öffnung an der Spitze des Stiftes verbleibt, welche beispielsweise für optische Erfassungseinrichtungen nutzbar ist.

Nach einer weiteren Ausführungsform kann ein elastischer Stab vorgesehen sein, welcher Biegungen in alle Richungen ermöglicht. Der Stab kann hierbei rotationssymmetrisch oder spiegelsymmetrisch entlang einer Ebene, die die Längsachse umfasst, ausgebildet sein. Ein entsprechender Stab hat den Vorteil, dass ein definierter Auftreffpunkt gegeben ist, der für bestimme Technologien zur Positionserfassung des Stiftes erforderlich ist. Entsprechend kann das Kontaktelement auch eine Spitze, insbesondere eine pyramiden- oder kegelförmige Spitze umfassen, die ebenfalls diese Anforderungen erfüllt. Eine derartige Spitze, sofern sie nicht elastisch oder flexible ausgebildet ist, kann an entsprechenden elastischen oder flexiblen Elementen bzw. beweglichen Elementen vorgesehen sein.

Das Kontaktelement kann auch einer Feder eines Füllfederhalters nachgebildet sein, welche durch die Durchbiegung der Feder senkrecht zur Federebene als auch durch Spreizung der Federteile eine Bewegung in mehrere Raumrichtungen ermöglicht.

Das Kontaktelement kann auch einen Rollkörper, beispielsweise eine drehbar gelagerte Zylinderrolle umfassen, die zusätzlich zur Realisierung einer Beweglichkeit in mehrere Raumrichtungen verschiebbar oder kipp- bzw. drehbar gelagert sein kann.

Hierfür kann beispielsweise ein Gestänge mit einem der mehreren Gelenken vorgesehen sein.

Letztendlich ist es auch möglich, eine Vielzahl von flexiblen Fasern oder Borsten entsprechend der Ausgestaltung eines Pinsels vorzusehen.

Das Kontaktelement kann aus Metall und/oder Kunststoff gebildet sein.

Da sämtliche Eingabestifte mit einem entsprechenden erfindungsgemäßen Kontaktelemente ausgestattet werden können, kann die Einrichtung zur Positionserkennung und/oder zur Dateneingabe auf unterschiedlichen Wechselwirkungen beruhen, z.B. mechanischer, magnetischer, elektrischer und/oder optischer Art. Beispielsweise kann das Kontaktelement mit einem drucksensitiven Monitor zusammenwirken, wobei durch die Beweglichkeit des Kontaktelements unmittelbar je nach Position, Ausrichtung und Druck ein unterschiedlich großer Bereich des drucksensitiven Monitors beeinflusst werden kann, so dass sich sehr einfach ein Pinseleffekt einstellt.

### KURZBESCHREIBUNG DER FIGUREN

Weitere Vorteile, Kennzeichen und Merkmale der vorliegenden Erfindung werden bei der nachfolgenden detaillierten Beschreibung von Ausführungsbeispielen anhand der beigefügten Zeichnungen deutlich. Die Zeichnungen zeigen hierbei in rein schematischer Weise in
- Fig. 1: eine Darstellung eines Datenverarbeitungsgerätes, mit welchem die vorliegende Erfindung verwirklicht werden kann;
- Fig. 2: eine Darstellung einer ersten Ausfiihrungsform eines erfindungsgemäßen Eingabegerätes;
- Fig. 3: eine zweite Ausführungsform eines erfindungsgemäßen Eingabegerätes;
- Fig. 4: eine Detailansicht eines weiteren Ausführungsbeispieles für ein erfindungsgemäßes Eingabegerät;
- Fig. 5: eine Detailansicht einer vierten Ausführungsform eines erfindungsgemäßen Eingabegerätes;
- Fig. 6: eine Detailansicht eines fünften Ausführungsbeispieles eines erfindungsgemäßen Eingabegerätes;
- Fig. 7: eine Detailansicht eines sechsten Ausführungsbeispieles eines erfindungsgemäßen Eingabegerätes; und in
- Fig. 8: eine Detailansicht einer siebten Ausführungsform eines erfindungsgemäßen Eingabegerätes.

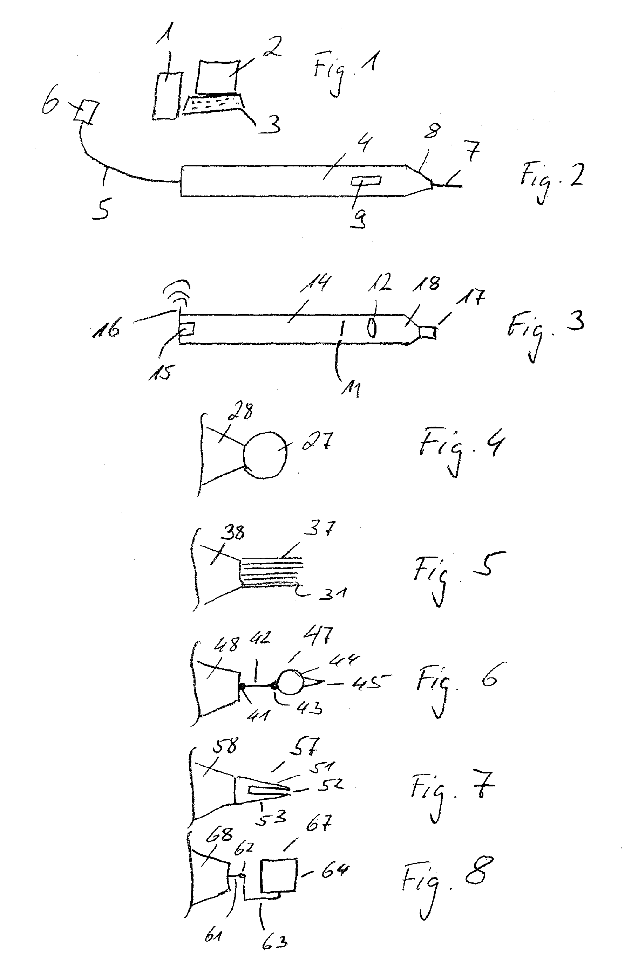

Die Figur 1 zeigt ein bekanntes Datenverarbeitungsgerät 1, beispielsweise einen Personal Computer (PC), welcher über einen Monitor 2 Informationen bzw. Daten ausgibt und in welchen über eine Tastatur 3 Daten eingegeben werden können. Darüber hinaus können andere Schnittstellen zur Datenein- und Ausgabe vorgesehen sein, wie z.B. Drucker, Lesegeräte für Speichermittel, wie CDs, DVDs usw. oder Verbindungen mit anderen Computern in einem Netzwerk (nicht dargestellt). Derartige Datenverarbeitungsgeräte weisen üblicherweise Speichermittel auf, auf denen Programme gespeichert sind, die beim Betrieb der Datenverarbeitungsanlage ausgeführt werden. Alternativ ist es auch vorstellbar, dass entsprechende Programme von einem entfernt vorgesehenen Speicherort, beispielsweise einem Server in einem Netzwerk zur Verfügung gestellt werden und lediglich teilweise auf dem entsprechenden Datenverarbeitungsgerät 1 ausgeführt werden.

Die Figur 2 zeigt eine erste Ausführungsform eines Eingabegeräts 4, mit welchem Informationen, bzw. Daten in ein Datenverarbeitungsgerät 1, wie oben beschrieben, eingegeben werden können. Die Datenverarbeitungsgeräte, welche mit dem Eingabegerät verwendet werden können, sind sehr vielfältig, und reichen von Minicomputer, sog. Personal Digital Systems PDA, über Mobiltelefone, Spielkonsolen oder allgemein tragbare oder mobile Datenverarbeitungsgeräte, bis hin zu stationären Anlagen, wie Workstation oder dgl. die separat oder in einem Netzwerk betrieben werden.

Das Eingabegerät 4 weist zur Verbindung mit einem entsprechenden Datenverarbeitungsgerät eine Schnittstelle auf, die es ermöglicht, eine Verbindung zwischen dem Datenverarbeitungsgerät 1 und dem Eingabegerät 4 herzustellen, die den Austausch von Daten und/oder die Energieversorgung ermöglicht. Die Schnittstelle umfasst hierfür ein Kabel 5 mit einem entsprechenden Stecker 6, wie beispielsweise einem USB-Stecker, der in eine entsprechende Steckdose des Datenverarbeitungsgeräts 1 gesteckt werden kann, um eine wirksame Verbindung herzustellen. Die Schnittstelle umfasst weiterhin alle erforderlichen Komponenten (nicht gezeigt) für einen wirksamen Datenaustausch, die auch im Datenverarbeitungsgerät implementiert sein können, wobei hier auch entsprechende Programme zur Steuerung des Datenaustausches mit umfasst sein können, welche auf dem Datenverarbeitungsgerät 1 gespeichert sind und dort ablaufen.

Das Eingabegerät 4 weist ein Schreib- und/oder Malende 8 auf, an welchem ein bewegliches Kontaktelement 7 in Form eines elastischen, flexiblen Stabes vorgesehen ist. Der elastische, flexible Stab 7 kann beliebig um eine Drehachse senkrecht zur Längsachse des Stabes 7 gedreht bzw. verbogen werden. Außerdem ist eine Stauchung des flexiblen Stabes 7 entlang der Längsachse des Stabes 7 möglich. Der elastische, flexible Stab 7 kehrt nach einer entsprechenden Verformung in seine ursprüngliche Ausgangsform zurück. Außerdem kann der flexible Stab 7 so in dem Schreib- und/oder Malende gelagert sein, dass eine reversible Verschiebung des gesamten flexiblen Stabes 7 entlang seiner Längsachse möglich ist.

Mittels des Eingabegerätes 4 können Daten in das Datenverarbeitungsgerät 1 eingegeben werden. Beispielsweise über einen drucksensitiven Bildschirm 2, bei welchem durch Anordnung von elektrisch leitfähigen Schichten auf dem Bildschirm durch Druck eine Kontaktierung erfolgen kann, so dass über entsprechende Software die Position, an welcher durch Druckausübung eine Kontaktierung der elektrischen Schichten erfolgt ist, eine Positionsbestimmung auf dem Monitor 2 möglich ist. Die Schnittstelle mit dem Kabel 5 und dem Stecker 6 des Dateneingabegerätes 4 dient hierbei lediglich zur Übermittlung von Befehlsdaten, die beispielsweise durch Betätigung einer oder mehrerer Funktionstasten 9 auf dem Dateneingabegerät 4 erzeugt werden. Beispielsweise kann die Funktionstaste 9 als Enter-Taste ähnlich einer entsprechenden Taste bei einer Computermaus ausgebildet sein.

Darüber hinaus kann bei Verwendung anderer Technologien, wie beispielsweise einem Dateneingabegerät 4, welches ein gerichtetes elektromagnetisches Feld erzeugt, welches mit einem Graphiktablett (nicht gezeigt) oder dgl., wie beispielsweise einen entsprechend hergerichteten Monitor, in Wechselwirkung tritt, die Kabelverbindung zur Steuerung und Energieversorgung einer Spule genutzt werden, die das elektromagnetische Feld erzeugt.

Alternativ ist es auch möglich, das Eingabegerät mit einem Stift 4 zu verwirklichen, welcher rein passiv ohne Verbindung mit der Datenverarbeitungsgerät 1 mit einem drucksensitiven Monitor 2 zusammenwirkt, so dass wesentliche Teile, wie die Positionserkennung, durch entsprechende Gestaltung des Datenverarbeitungsgerätes bzw. eines entsprechenden Monitors hierfür verwirklicht sind. In diesem Fall ist keine Verbindung des Stiftes 4 mit dem Datenverarbeitungsgerät 1 erforderlich, sondern die Schnittstellen zwischen Eingabegerät und Datenverarbeitungsgerät sind in dem Datenverarbeitungsgerät 1 integriert. Darüber hinaus ist es auch vorstellbar, dass für elektrotechnische Komponenten zur Positionserkennung und/oder Eingabe von Daten in dem Stift 4 die Energieversorgung auf induktivem Wege erfolgt, so dass ebenfalls auf eine Kabelverbindung für die Datenübermittlung und/oder Energieversorgung verzichtet werden kann. Darüber hinaus können die Daten auch über eine drahtlose Datenverbindung an das Datenverarbeitungsgerät übermittelt werden. Eine entsprechende Ausführungsform wird beispielsweise in Figur 3 beschrieben.

Ein kabelgebundener Computereingabestift ist beispielsweise in der britischen Patentanmeldung GB 22 70 740 A beschrieben, welche hiermit durch Verweis hierin aufgenommen wird. Die vorliegende Erfindung kann bei einem derartigen Stift verwirklicht werden.

Gemäß Figur 2 weist der Stift 4 einen flexiblen Stab 7 als bewegliches Kontaktelement am Schreib- und/oder Malende 8 auf. Der flexible Stab 7 kann zur Positionserfassung und/oder Eingabe von Daten, beispielsweise einem drucksensitiven Monitor verwendet werden, oder dient lediglich zur Führung des Stiftes auf einer Oberfläche, um ein Gefühl wie beim echten Malen mit einem Pinsel zu haben.

Um die Oberfläche, auf welcher der Stift 4 entlang geführt wird, zu schonen, und um das oben angesprochene Gefühl zu vermitteln, welches dem Malen mit einem Pinsel nahe kommt, ist der flexible Stab 7 so elastisch ausgeführt, dass der Stab in jede Richtung gebogen werden kann, also um beliebige Drehachsen senkrecht zur Längsachse des Stabes 7. Dadurch ergibt sich ein Gefühl wie bei der Pinselführung auf einer Leinwand, da auch ein Pinsel bei stärkerem Aufdruck nachgibt und somit eine druckabhängige Pinselführung gegeben ist. Dies wird mit der erfindungsgemäßen Gestaltung des Kontaktelements am Schreib- und/oder Malende eines entsprechenden Stiftes 4 bzw. Eingabegerätes verwirklicht. Dies kann für Computereingabestifte jeglicher Art eingesetzt werden.

Die Figur 3 zeigt eine zweite Ausführungsform eines Stiftes 14, bei welchem die Positionserkennung über optische Einrichtungen 11, 12 erfolgt. Hierzu sind in dem Ausführungsbeispiel der Figur 3 eine optische Linse 12 schematisch für eine Abbildungsvorrichtung und ein optischer Sensor 11, z.B. ein CCD-Sensor, dargestellt. Der Sensor kann beispielsweise Positionssignale eines Monitors 2 erfassen, so dass auf Basis dieser erfassten Daten eine Positionsbestimmung erfolgen kann, beispielsweise mittels eines in dem Datenverarbeitungsgerät 1 ablaufenden Computerprogrammes. Um der Abbildungsvorrichtung 12 und dem optischen Sensor 11 die Möglichkeit zu geben die entsprechenden Lichtsignale zu erfassen, ist das Schreib- und/oder Malende offen ausgebildet, so dass Licht in den Stift 14 eindringen kann. Entsprechend ist anstelle eines flexiblen Stabes 7 bei der Ausführungsform der Figur 3 eine elastische Zylinderrohrhülse 17 vorgesehen, durch welche die Lichtsignale hindurch in das Innere des Stiftes 14 geleitet werden können.

Durch die optischen Mittel kann der Stift die optischen Signale des Monitors erfassen, wie es beispielsweise in der EP 0 710 66 44.3 beschrieben ist, welche hiermit ebenfalls durch Verweis vollständig mit aufgenommen ist. Die erfassten Signale können in dem Stift 14 in einer nicht näher dargestellten Verarbeitungseinheit ausgewertet werden und die so ermittelten Positionssignale über eine drahtlose Verbindung mit einem Sender 15 und einer Antenne 16 an einem entsprechenden Empfänger des Datenverarbeitungsgerätes 1 übermittelt werden. Alternativ kann auf eine Verarbeitungseinheit im Stift 14 verzichtet werden und die erfassten Signaldaten können direkt über die drahtlose Funkverbindung an das Datenverarbeitungsgerät 1 übermittelt werden, wo sie beispielsweise über ein entsprechendes Computerprogramm ausgewertet werden. Die Eingabe von Daten kann in einfacher Weise derart erfolgen, dass unmittelbar an dem erfassten Ort bzw. der erfassten Position eine vorher in einem Menü ausgewählte Dateninformation eingegeben wird, beispielsweise in einem Malmodus eine entsprechend ausgewählte Farbe an dem erfassten Ort des Stiftes 14 in dem zu beschreibenden Blatt hinterlegt wird.

Alternativ kann auch ein zusätzlicher Schalter (nicht gezeigt) vorgesehen sein, wie beispielsweise in der Ausführungsform der Figur 2 mit dem Schalter 9, so dass durch Betätigen des Schalters 9 eine entsprechende Eingabe, z.B. aus einem Menü welches an dem Bildschirm 2 angezeigt wird, ausgewählt wird.

Grundsätzlich sind sämtliche unterschiedlichen Stifttechnologien als Eingabegeräte für Datenverarbeitungsanlagen im Zusammenhang mit der vorliegenden Erfindung denkbar.

Entsprechend wird bei den weiteren Ausführungsformen auf die Beschreibung des Stiftes und die Verbindung mit dem Datenverarbeitungsgerät verzichtet, sondern lediglich das entsprechende Schreib- und/oder Malende beschrieben.

Die Figur 4 zeigt eine Ausführungsform, bei welcher das bewegliche Kontaktelement als elastische Holkugel in Form eines Balgs 27 oder dgl. ausgebildet ist und an dem entsprechenden Schreib- und/oder Malende 28 angeordnet ist. Eine derartige elastische Kugel oder entsprechende Abwandlungen mit elliptischen Querschnitt oder dgl. ermöglichen ebenfalls die Simulation eines Pinselgefühles für ein Stifteingabegerät. Ferner ist es auch möglich, entsprechende Fasern oder Borsten 31 gemäß der Ausführungsform der Figur 5 vorzusehen, so dass eine Vielzahl entsprechender Fasern oder Borsten 31 das bewegliche Kontaktelement 37 beim Schreib- und/oder Malende 38 eines entsprechenden Eingabestiftes bilden. Diese Ausführungsform kommt der tatsächlichen Gestaltung eines Pinsels am nächsten. Zum Zusammenwirken mit optischen Positionserfassungskomponenten können die Borsten oder Fasern 31 als Lichtleiter, d.h. Glasfasern oder dgl. ausgebildet sein. Insbesondere können die Fasern 31 entgegen der schematischen Darstellung der Figur 5 so angeordnet sein, dass sie nicht parallel zueinander ausgerichtet sind, sondern spitz zueinander zulaufen.

Eine weitere Ausführungsform zur Gestaltung eines Schreib- und/oder Malendes 48 eines Computereingabestiftes ist in Figur 6 gezeigt. Dort ist ein bewegliches Kontaktelement 47 verwirklicht, welches eine starre Spitze 45 in Form eines spitz zulaufenden Kegels an einer starren Kugel 44 aufweist, welche über Gelenke 41, 43 in einem Gestänge 42 an dem Schreib- und/oder Malende beweglich angeordnet ist.

Die Gelenke 41 und 43 können als flexible Festkörpergelenke z.B. in der Art eines elastischen Filmscharnieres mit vielfältigen Drehachsen ausgebildet sein oder als unidirektional funktionierende Drehgelenke, welche eine Drehbewegung um eine fest definierte Drehachse ermöglichen. In diesem Fall können die Drehachsen der beiden Drehgelenke 41 un43 insbesondere senkrecht zueinander angeordnet sein, um unabhängige Drehbewegungen der Spitze 45 gegenüber dem Schreib- und/oder Malende 48 zu ermöglichen.

Eine weitere Möglichkeit der Ausgestaltung des Schreib- und/oder Malendes eines Stiftes ist mit dem Schreib- und/oder Malende 58 der Ausführungsform der Figur 7 gegeben. Das bewegliche Kontaktelement 57 ist dort in der Art einer Feder eines Füllfederhalters ausgebildet, wobei die Feder in einer dreieckförmigen Grundform mit einem mittig angeordneten, die dreieckige Grundform in zwei Teile 51 und 53 unterteilenden Schlitz 52 ausgebildet ist. Durch die Gestaltung ist somit eine federnde Spreizung der Teile 51 und 53 durch den Schlitz 52 möglich. Entsprechend ist also eine Bewegung der Teile 51 und 53 senkrecht zur Längserstreckung des Schlitzes 52 und senkrecht zur Hauptfläche möglich. In Bezug auf die Berührungsfläche sind unabhängige Bewegungen zum einen parallel zur Berührungsfläche und zum anderen senkrecht zur Berührungsfläche gegeben.

Darüber hinaus ist es vorstellbar die Feder beweglich im Schreib- und/oder Malende aufzunehmen, so dass insgesamt eine Bewegung der Feder bzgl. des Schreib- und/oder Malendes 58 möglich ist.

Eine siebte Ausfiihrungsform der vorliegenden Erfindung ist in Figur 8 gezeigt. An dem Schreib- und/oder Malende 68 ist eine drehbar gelagerte Zylinderrolle 64 vorgesehen, welche über ein Gestänge 61, 63 an dem Schreib- und/oder Malende gehalten ist. Die drehbare Rolle 64 des beweglichen Kontaktelements 67 ist in einem U-förmigen Gestänge 63 drehbar gelagert, wobei das U-förmige Gestänge 63 wiederum über ein Gelenk 62 an einem Gestänge 61 angeordnet ist. Das Gelenk 62 kann als multidirektionales Gelenkt, in Form eines elastischen, flexiblen Feststoffgelenks ausgebildet sein, oder als unidirektionales Gelenk, welches beispielsweise eine Drehung um eine Drehachse parallel zur Drehachse der Rolle 64 ermöglicht. Alternativ kann die Drehung auch senkrecht zur Drehachse der Rolle 64 vorgesehen sein. Das Kontaktelement 67 ist in mehrerer Raumrichtungen beweglich, da durch das Abrollen der Rolle 64 eine Bewegung des Kontaktelement 67 in sich gegeben ist, während andererseits durch das Gelenk 62 eine weitere überlagerte Bewegung in eine weitere Raumrichtung möglich ist.

Obwohl die vorliegende Erfindung anhand der beiliegenden Ausführungsbeispiele detailliert beschrieben worden ist, ist für den Fachmann selbstverständlich, dass die Erfindung nicht auf diese Ausführungsbeispiele beschränkt ist, sondern vielmehr Abwandlungen in der Weise möglich sind, dass unterschiedliche Kombinationen der einzelnen Merkmale der Ausführungsbeispiele miteinander kombiniert werden können oder einzelne Merkmale ganz weggelassen werden können, ohne den Schutzbereich der beigefügten Ansprüche zu verlassen.

## Patentansprüche

1. Eingabegerät für ein Datenverarbeitungsgerät mit einer Schnittstelle zur Verbindung mit einem Datenverarbeitungsgerät und einer Einrichtung zur Positionserkennung, wobei das Eingabegerät einen Stift (4) mit einem Grundkörper umfasst, dessen eines Ende als Schreib- und/oder Malende (8) zur Eingabe von Daten ausgebildet ist
**dadurch gekennzeichnet, dass**
das Schreib- und/oder Malende mindestens ein zumindest teilweise in mehrere Raumrichtungen bewegliches Kontaktelement (7) aufweist.

2. Eingabegerät nach Anspruch 1,
**dadurch gekennzeichnet, dass**
das Kontaktelement (7) zumindest teilweise in sich deformierbar ist.

3. Eingabegerät nach einem der vorhergehenden Ansprüche,
**dadurch gekennzeichnet, dass**
das Kontaktelement (7) entlang einer oder mehrerer Raumachsen verschiebbar und/oder um ein oder mehrere Raumachsen verschwenkbar ist.

4. Eingabegerät nach einem der vorhergehenden Ansprüche,
**dadurch gekennzeichnet, dass**
das Kontaktelement (7) ein oder mehrere Gelenke umfasst.

5. Eingabegerät nach einem der vorhergehenden Ansprüche,
**dadurch gekennzeichnet, dass**
das Kontaktelement (7) reversibel deformierbar und/oder flexibel beweglich ist.

6. Eingabegerät nach einem der vorhergehenden Ansprüche,
**dadurch gekennzeichnet, dass**
das Kontaktelement (7) in alle unabhängigen Raumrichtungen flexibel ist.

7. Eingabegerät nach einem der vorhergehenden Ansprüche,
**dadurch gekennzeichnet, dass**
das Kontaktelement (7) einen elastischen Hohlkörper, insbesondere eine Hohlkugel oder einen ähnlichen Hohlkörper oder ein Teil davon umfasst.

8. Eingabegerät nach einem der vorhergehenden Ansprüche,
**dadurch gekennzeichnet, dass**
das Kontaktelement (7) eine elastische Hülse oder rohrartigen Körper, insbesondere eine Zylinderhülse oder ein Mehrkantrohr umfasst.

9. Eingabegerät nach einem der vorhergehenden Ansprüche,
**dadurch gekennzeichnet, dass**
das Kontaktelement (7) einen elastischen Stab umfasst.

10. Eingabegerät nach einem der vorhergehenden Ansprüche,
**dadurch gekennzeichnet, dass**
das Kontaktelement (47) eine Spitze, insbesondere pyramiden- oder kegelförmige Spitze umfasst.

11. Eingabegerät nach einem der vorhergehenden Ansprüche,
**dadurch gekennzeichnet, dass**
das Kontaktelement (57) einen Dreieckskörper, insbesondere einen Dreieckskörper mit zumindest teilweise halbierendem Schlitz, und/oder zwei oder mehr Dreieckskörper umfasst, welche insbesondere elastisch ausgebildet sind.

12. Eingabegerät nach einem der vorhergehenden Ansprüche,
**dadurch gekennzeichnet, dass**
das Kontaktelement (67) einen Rollkörper, insbesondere eine drehbar gelagerte Zylinderrolle umfasst.

13. Eingabegerät nach einem der vorhergehenden Ansprüche,
**dadurch gekennzeichnet, dass**
das Kontaktelement ein Gestänge mit ein oder mehreren Gelenken, insbesondere elastischen Festkörpergelenken umfasst, wobei das Gestänge vorzugsweise zumindest teilweise eine U-Form aufweist.

14. Eingabegerät nach einem der vorhergehenden Ansprüche,
**dadurch gekennzeichnet, dass**
das Kontaktelement (37) eine Vielzahl von flexiblen Fasern oder Borsten umfasst.

15. Eingabegerät nach einem der vorhergehenden Ansprüche,
**dadurch gekennzeichnet, dass**
das Kontaktelement aus Metall und/oder Kunststoff gebildet ist.

16. Eingabegerät nach einem der vorhergehenden Ansprüche,
**dadurch gekennzeichnet, dass**
die Einrichtung zur Positionserkennung auf Grund mechanischer, magnetischer, elektrischer und/oder optischer Wechselwirkung bei Kontakt mit einer Bezugsfläche oder berührungslos, insbesondere bei Annäherung an eine Bezugsfläche die Position des Eingabegeräts erfasst.

17. Eingabegerät nach Anspruch 16,
**dadurch gekennzeichnet, dass**
die Bezugsfläche ein Monitor (2), ein Digitalisierungsboard oder eine beliebige, insbesondere ebene, feste Fläche ist.

18. Eingabegerät nach einem der vorhergehenden Ansprüche,
**dadurch gekennzeichnet, dass**
das Schreib- und/oder Malende Teil der Einrichtung zur Positionserkennung ist oder mit dieser zusammenwirkt.

19. Eingabegerät nach einem der vorhergehenden Ansprüche,
**dadurch gekennzeichnet, dass**
die Eingabe von Daten durch Positionserfassung des Eingabegeräts erfolgt.

20. Eingabegerät nach einem der vorhergehenden Ansprüche,
**dadurch gekennzeichnet, dass**
die Komponenten des Eingabegeräts alle oder nur teilweise im Grundkörper aufgenommen sind.

21. Eingabegerät nach einem der vorhergehenden Ansprüche,
**dadurch gekennzeichnet, dass**
Teile des Eingabegeräts in dem Datenverarbeitungsgerät (1) verwirklicht sind, für welche das Eingabegerät zur Dateneingabe vorgesehen ist oder dass Teile des Datenverarbeitungsgeräts oder das gesamte Datenverarbeitungsgerät im Eingabegerät vorgesehen sind.

22. Eingabegerät nach einem der vorhergehenden Ansprüche,
**dadurch gekennzeichnet, dass**
Teile des Eingabegeräts durch ein auf dem Datenverarbeitungsgerät durchführbares Programm verwirklicht sind.

23. Datenverarbeitungsgerät mit einem Eingabegerät nach einem der vorhergehenden Ansprüche.
